# EUROPÄISCHE PATENTSCHRIFT

(11) **EP 1 525 032 B1**
(45) Veröffentlichungstag und Bekanntmachung des Hinweises auf die Patenterteilung: **24.11.2010**
(21) Anmeldenummer: 03783982.6
(22) Anmeldetag: 18.06.2003
(51) Int. Cl.: A62D 3/00

(54) **VERFAHREN ZUR BEHANDLUNG HALOGENHALTIGER ABFALLSTOFFE**
METHOD FOR TREATING WASTE MATERIALS CONTAINING HALOGEN
PROCEDE DE TRAITEMENT DE DECHETS HALOGENES

(30) Priorität: 31.07.2002 DE 10234837
(43) Veröffentlichungstag der Anmeldung: 27.04.2005
(73) Patentinhaber: Karlsruher Institut für Technologie, 76131 Karlsruhe (DE)
(72) Erfinder: HORNUNG, Andreas, 76135 Karlsruhe (DE); BALABANOVICH, Aliaksandr, 76133 Karlsruhe (DE); DONNER, Susanne, 76187 Karlsruhe (DE); SEIFERT, Helmut, 67069 Ludwigshafen (DE)
(86) Internationale Anmeldenummer: PCT/EP2003/006425
(87) Internationale Veröffentlichungsnummer: WO 2004/014491

(56) Entgegenhaltungen:
- EP-A- 0 554 761
- WO-A-83/04259
- WO-A-96/27412
- BE-A- 903 383
- US-A- 4 982 027
- US-A- 5 688 335

## Beschreibung

Die Erfindung betrifft ein Verfahren zur Behandlung halogenhaltiger Abfallstoffen gemäß dem ersten Patentanspruch.

Elektro- und Elektronikschrott enthält eine Reihe von giftigen Verbindungen. Unter diesen giftigen Verbindungen sind hauptsächlich halogenierte Kohlenwasserstoffe, insbesondere bromierte Kohlenwasserstoffe zu nennen. Bromierte Kohlenwasserstoffe finden häufig in Flammschutzmitteln Verwendung. Der Bromanteil kann 20 bis 40 Gew.-% betragen. Vielfach wird Tetrabrombisphenol A in Flammschutzmitteln eingesetzt; andere häufig verwendete bromhaltige Verbindungen sind polybromierte Diphenylether und Bis(tribromphenoxy)ethan. Aber auch chlorhaltige Kohlenwasserstoffe und solche, die sowohl Chlor als auch Brom enthalten, spielen eine wichtige Rolle.

Eine übliche Methode zur Behandlung von schadstoffhaltigen Abfallstoffen besteht darin, sie einer Pyrolyse auszusetzen. Die Pyrolyse besitzt gegenüber anderen Entsorgungsverfahren wie Verbrennung oder Deponierung den Vorteil, dass chemische Stoffe und/oder Energie zurückgewonnen werden können. Bei halogenhaltigen, insbesondere bei brom- und chlorhaltigen Abfallstoffen ist diese Methode jedoch problematisch, da dabei ein breites Spektrum weiterer giftiger Verbindungen entsteht. Beispielsweise bildet Tetrabrombisphenol A beim Pyrolysieren giftige mono- und di-Bromphenole. Andere typische Pyrolyseprodukte sind halogenierte p-Dibenzodioxine (PBDD) und p-Dibenzofurane (PBDF). Dem Vorteil einer Energie- und Wertstoffrückgewinnung steht somit die Toxizität der Pyrolyseprodukte gegenüber.

Aus der DE 44 25 658 C1 ist bekannt, dass polyhalogenierte Verbindungen aus dem Rauchgas einer Verbrennungsanlage in Kontakt mit Polyolefinen, insbesondere mit Polyethylen und Polypropylen, abgetrennt werden können. Dabei werden die polyhalogenierten Verbindungen in den Polyolefinen jedoch nur reversibel adsorbiert, so dass sie sich unter geeigneten Bedingungen wieder desorbieren lassen. Für eine endgültige und langwährende Immobilisierung dieser halogenierten

Schadstoffe sind Polyolefine als Adsorptionsmittel unter den in der zitierten Patentschrift beschriebenen Randbedingungen nicht geeignet.

Der Erfindung liegt die Aufgabe zugrunde, ein Verfahren zur Behandlung halogenhaltiger, insbesondere bromhaltiger Abfallstoffe vorzuschlagen, bei dem sich wie generell in Pyrolyseverfahren Wertstoffe und/oder Energie zurückgewinnen lassen und die Abfallstoffe zumindest weitgehend zerstört werden, bei dem jedoch in größerem Ausmaß keine zusätzlichen halogenierten Schadstoffe entstehen.

Die Aufgabe wird durch das im ersten Patentanspruch beschriebene Verfahren gelöst. Die weiteren Ansprüche geben bevorzugte Ausgestaltungen des Verfahrens an.

Erfindungsgemäß werden die halogenhaltigen Abfallstoffe mit einem aufgeschmolzenen, substituierten oder unsubstituierten Polyolefin vermischt. Unter halogenhaltigen Abfallstoffe sollen insbesondere Abfallstoffe aus der Produktion von Komponenten der Elektro- und Elektronikindustrie, aber auch Elektro- und Elektronikgeräte selbst oder ihre Einzelteile verstanden werden. Das wichtigste Einsatzgebiet des Verfahrens ist die Anwendung auf halogenierte, vorzugsweise bromierte Kohlenwasserstoffe, die in der Technik der elektrischen Isolation und/oder dem Flammschutz dienen. Die Vermischung mit den halogenhaltigen Abfallstoffen erfolgt mit einem aufgeschmolzenen Polyolefin, dessen Temperatur somit mindestens der Schmelztemperatur entspricht.

Das Verfahren wird in allen seinen Varianten unter Inertgasatmosphäre durchgeführt, da sonst das Polyolefin bei den Verfahrenstemperaturen verbrennen kann. Zur Herstellung der Inertgasatmosphäre können die üblichen Schutzgase verwendet werden. Wichtig ist in allen Fällen, dass kein Sauerstoff anwesend ist. Das Verfahren kann unter Normaldruck, aber auch unter einem erhöhten Druck, beispielsweise bis zu 10 bar, durchgeführt werden.

Manche Polyolefine schmelzen auch unter Inertgasatmosphäre nur unter Zersetzung. Die Zersetzung kann bereits beim Schmelzpunkt einsetzen. Soweit bei der Beschreibung des Verfahrens von einem Schmelzpunkt die Rede ist, ist der Übergang von der festen zur flüssigen Phase gemeint, wobei eine chemische Zersetzung unbeachtlich ist. Eine beginnende Zersetzung des Polyolefins während des Aufschmelzens beeinträchtigt das Verfahren keineswegs.

An sich können die halogenhaltigen Abfallstoffe in fester und nicht vorbehandelter Form mit dem aufgeschmolzenen Polyolefin vermischt werden. Man erhält jedoch weniger zufriedenstellende Ergebnisse, wenn die Abfallstoffe bei der Temperatur, bei der das Polyolefin aufgeschmolzen wird, fest bleiben. Beispielsweise ist es weniger günstig, feste Komponenten wie Transformatoren ohne weitere Vorbehandlung dem erfindungsgemäßen Verfahren zu unterwerfen. Vielmehr sollen die Abfallstoffe so weit getrennt werden, dass die zu behandelnden Stoffe bei der Temperatur, bei der das Polyolefin aufgeschmolzen wird, zumindest flüssig, vorzugsweise jedoch gasförmig sind. In der Praxis bedeutet das, dass Metalle wie z. B. Gehäuseteile oder Stützstrukturen vor Beginn des Verfahrens von den chemischen Verbindungen, die der elektrischen Isolation oder dem Flammschutz dienen, zumindest grob getrennt werden sollten.

Bei halogenhaltigen Abfallstoffen, die bei der Temperatur der Polyolefin-Schmelze gasförmig vorliegen, ist eine Verfahrensvariante besonders gut geeignet, gemäß der geschmolzenes Polyolefin vorgelegt und der gasförmige halogenhaltige Abfallstoff durch das flüssige Polyolefin geleitet und auf diese Weise mit der Polyolefin-Schmelze vermischt wird. Auf diese Weise wird eine besonders intensive Mischung von Polyolefin und Abfallstoff erzielt, weshalb sich erheblich höhere Ausbeuten ergeben als bei anderen Verfahrensvarianten.

Die beiden einfachsten Polyolefine, Polyethylen und Polypropylen, sind für das Verfahren besonders geeignet. Ihr Schmelzpunkt liegt im Bereich von ca. 200°C. Das Verfahren kann somit je nach der Natur der Abfallstoffe in einem Temperaturbereich zwischen ca. 200°C, dem Schmelzpunkt des Polyolefins, und 500°C durchgeführt werden. Falls keine schwer umsetzbaren Abfallstoffe eingesetzt werden, wird ein Temperaturbereich knapp über der Schmelztemperatur, also etwa 50°C bis maximal 200°C oberhalb der Schmelztemperatur, bevorzugt.

Anstelle der unsubstituierten Polyolefine Polyethylen und Polypropylen können auch substituierte Polyolefine eingesetzt werden. Als substituiertes Polyolefin eignet sich vor allem Polyvinylalkohol.

Bei der Reaktion des halogenhaltigen Abfalls mit dem Polyolefin wird dem Abfall der Halogenanteil entzogen, wobei sich Halogenwasserstoff bildet. Da - wie eingangs erwähnt - im Elektro- und Elektronikbereich viele bromhaltige Verbindungen eingesetzt werden, bildet sich bei der Durchführung des Verfahrens Bromwasserstoff. Bromwasserstoff stellt einen beträchtlichen Wert dar und wird deshalb vorzugsweise bei der Durchführung des Verfahrens von den übrigen Ausgangs- und Reaktionsprodukten abgetrennt und aufgefangen. Dies bereitet keine Schwierigkeiten, da Bromwasserstoff unter den Reaktionsbedingungen gasförmig vorliegt und allenfalls von gasförmigen halogenhaltigen Abfallstoffen getrennt werden muss.

Die thermische Behandlung von bromhaltigen Kohlenwasserstoffen ohne den Einsatz eines Reaktionspartners führt bei Temperaturen oberhalb von 270°C zur Spaltung der Kohlenstoff-Brom-Bindung. Bei Aromaten werden dabei Phenyl- und Bromradikale gebildet. Die Stabilisierung von Phenylradikalen kann z. B. durch Radikalrekombination mit einer anderen aromatischen Verbindung erfolgen. Dieser Reaktionsweg führt zu Biphenylderivaten, zur Verkohlung und zur Bildung von PBDD und PBDF (Eitan J. C. Borojovich, Zeev Aizenshtat, "Thermal behavior of brominated and polybrominated compounds II. Pyroproducts of brominated phenols as mechanistic tools", Journal of Analytical and Applied Pyrolysis 63 (2002) 129-145).

Es hat sich gezeigt, dass die Bildung von PBDD und PBDF wirksam unterdrückt wird, wenn die Pyrolyse in Gegenwart von Polyolefinen, insbesondere von Polyethylen und Polyproylen, erfolgt. In diesem Fall scheinen die Phenyl- und Bromradikale die Makromoleküle des Polyolefins unter Wasserstoffabstraktion anzugreifen, so dass auf diese Weise eine Entbromierung erfolgt. Geht man beispielsweise von Bromphenol und Polyproyplen aus, so gewinnt man Phenol und Bromwasserstoff als Hauptprodukte. Als Nebenprodukte bilden sich Alkylphenole und Alkylbromide. Die Zugabe von Polyethylen oder Polypropylen lässt aus den Radikalen stabile Moleküle entstehen, und damit wird auch die Bildung von PBDD und PBDF vermieden.

Die Reaktion kann in einer üblichen Weise durchgeführt werden. Die Mengenverhältnisse zwischen dem halogenhaltigen Abfallstoff und dem einzusetzenden Polyolefin lassen sich in Kenntnis des Halogenanteils errechnen. Die optimale Verfahrenstemperatur kann anhand einiger Vorversuche ermittelt werden. Eine brauchbare Verfahrensführung ist, in einem Reaktor kontinuierlich Polyolefin aufzuschmelzen, das von einem gasförmigen Strom des halogenhaltigen Abfallstoffes durchströmt wird. Der entstandene Bromwasserstoff wird kontinuierlich von restlichen Abfallstoffen abgetrennt. Die restlichen Abfallstoffe können rezykliert werden.

Die Erfindung wird im folgenden mit einem Durchführungsbeispiel näher erläutert.

### Beispiel:

Verschiedene stöchiometrische Mischungen an substituiertem oder unsubstituiertem Polyolefin wurden mit bromhaltigen Verbindungen in geschlossenen und offenen Reaktionssystemen umgesetzt. Eine geeignete unter mehreren möglichen Versuchsdurchführungen beschreibt die nachstehende Vorschrift: 80 mg Tetrabrombisphenol A oder 2,4-Dibromphenol werden unter Stickstoffatmosphäre zusammen mit 15 mg Polypropylen in eine Glasampulle mit einer Länge von 6,5 cm und einem Durchmesser von 6 mm eingebracht. Diese wird anschließend abgeschmolzen und bei 350 °C für 20 Minuten pyrolysiert.

Eine Gaschromatographie/Massenspektrometrie-Untersuchung der Pyrolyseprodukte zeigt, dass Phenol, Alkylphenol und Bromwasserstoff Hauptprodukte sind. Bromhaltige Verbindungen, vor allem polybromierte Dibenzodioxine und -furane, sind nicht nachweisbar.

## Patentansprüche

1. Verfahren zur Behandlung halogenhaltiger Abfallstoffe mit den Schritten:
a) Vermischen der halogenhaltigen Abfallstoffe mit einem aufgeschmolzenen, substituierten oder unsubstituierten Polyolefin in einer Inertgasatmosphäre,
b) Abtrennen des beim Aufschmelzen entstehenden Halogenwasserstoffs.

2. Verfahren nach Anspruch 1 mit Polyvinylalkohol, Polyethylen und/oder Polypropylen als Polyolefin.

3. Verfahren nach Anspruch 1 oder 2, bei dem das aufgeschmolzene Polyolefin eine Temperatur zwischen dem Schmelzpunkt des Polyolefins und 500°C aufweist.

4. Verfahren nach Anspruch 1, 2 oder 3, bei dem die halogenhaltigen Abfallstoffe Brom enthalten.

5. Verfahren nach Anspruch 4 mit solchen Brom enthaltenden Abfallstoffen, die bei einer Temperatur oberhalb des Schmelzpunkts des Polyolefins gasförmig sind.

6. Verfahren nach Anspruch 5 bei dem das Vermischen der halogenhaltigen Abfallstoffe mit dem Polyolefin **dadurch** erfolgt, dass die gasförmigen Abfallstoffe durch das aufgeschmolzene Polyolefin geleitet werden.

7. Verfahren nach Anspruch 4, 5 oder 6, bei dem entstehender Bromwasserstoff aufgefangen und isoliert wird.

## Claims

1. Method for treating waste materials containing halogen, said method comprising the following steps:
a) mix the waste materials containing halogen with a molten, substituted or non-substituted polyolefin in an inert gas atmosphere,
b) separate off the hydrogen halogenide produced during the melting process.

2. Method according to Claim 1 with polyvinyl alcohol, polyethylene and/or polypropylene as polyolefin.

3. Method according to Claim 1 or 2, where the temperature of the molten polyolefin is between the melting point of the polyolefin and 500°C.

4. Method according to Claim 1, 2 or 3, where the waste materials containing halogen contain bromine.

5. Method according to Claim 4, with such waste materials containing bromine that are gaseous at a temperature above the melting point of the polyolefin.

6. Method according to Claim 5, where the mixing of the waste materials containing halogen with the polyolefin is effected by the gaseous waste materials being conducted through the molten polyolefin.

7. Method according to Claim 4, 5 or 6, where generated hydrogen bromide is collected and isolated.

## Revendications

1. Procédé de traitement de déchets halogénés comprenant les étapes suivantes :
a) on mélange les déchets halogénés avec des polyoléfines fondues substituées ou non substituées dans une atmosphère de gaz inerte
b) on sépare l'hydrogène halogéné dégagé par la fusion.

2. Procédé selon la revendication 1, selon lequel les polyoléfines sont l'alcool polyvinylique, le polyéthylène et/ou le polypropylène.

3. Procédé selon la revendication 1 ou 2, selon lequel la polyoléfine fondue a une température comprise entre le point de fusion de la polyoléfine et 500 ° C.

4. Procédé selon la revendication 1 ou 2 ou 3, selon lequel les déchets halogénés contiennent du brome.

5. Procédé selon la revendication 4, selon lequel les déchets contenant du brome sont à l'état gazeux à une température supérieure au point de fusion de la polyoléfine.

6. Procédé selon la revendication 5, selon lequel le mélange des déchets halogénés avec la polyoléfine consiste à faire passer les déchets gazeux à travers de la polyoléfine fondue.

7. Procédé selon les revendications 4, 5 ou 6, selon lequel on recueille et on isole l'acide bromique.
